Europäisches Patentamt

European Patent Office

Office européen des brevets

(19)

(11) Veröffentlichungsnummer : **0 182 282**
**B1**

(12) **EUROPÄISCHE PATENTSCHRIFT**

(45) Veröffentlichungstag der Patentschrift :
21.10.87

(21) Anmeldenummer : 85114463.4

(22) Anmeldetag : 14.11.85

(51) Int. Cl.⁴ : **C 08 F 2/24**

(54) **Polymerisationsemulgatoren.**

(30) Priorität : 22.11.84 DE 3442457

(43) Veröffentlichungstag der Anmeldung :
28.05.86 Patentblatt 86/22

(45) Bekanntmachung des Hinweises auf die Patenterteilung : 21.10.87 Patentblatt 87/43

(84) Benannte Vertragsstaaten :
AT BE CH DE FR GB LI NL

(56) Entgegenhaltungen :
US-A- 3 839 318

(73) Patentinhaber : Henkel Kommanditgesellschaft auf
Aktien
Postfach 1100 Henkelstrasse 67
D-4000 Düsseldorf-Holthausen (DE)

(72) Erfinder : Höfer, Rainer, Dr.
Klever Strasse 31
D-4000 Düsseldorf 30 (DE)
Erfinder : Schmid, Karl-Heinz, Dr.
Stifterstrasse 10
D-4020 Mettmann (DE)
Erfinder : Wegemund, Bernd, Dr.
Händelweg 3
D-5657 Haan 1 (DE)

EP 0 182 282 B1

**0 182 282**

## Beschreibung

Die Erfindung betrifft die Verwendung von Alkylglykosiden als Emulgatoren bei der Polymerisation ethylenisch ungesättigter Monomerer.

Alkylglykoside sind seit langer Zeit bekannt. Ihre Herstellung wird beispielsweise in der US-A-3 839 318 beschrieben. Danach geht man von Glucose oder Oligosacchariden zum einen und Alkoholen der Kettenlänge $C_8$ bis $C_{25}$ zum anderen aus. Technische Bedeutung haben die Alkylglykoside als oberflächenaktive Stoffe in beispielsweise Waschmitteln gefunden. Darüber hinaus wurden Alkylglykoside auch für verschiedene technische Verwendungen vorgeschlagen. So beschreibt die ältere deutsche Patentanmeldung P 34 04 558.9 der Anmelderin spezielle wäßrige Lackharzdispersionen, in denen Alkylglykoside als einbaubare d. h. beim Einbrennen mit vernetzbare Emulgatoren enthalten sind.

In der US-A-3 340 243 wird ein Herstellungsverfahren von PVC durch Suspensionspolymerisation beschrieben, wobei neben Schutzkolloiden Methylglukosiddilaurat als Dispergiermittel verwendet wird. Dabei handelt es sich nicht um ein Alkylglykosid im anmeldungsgemäßen Sinne.

Auf dem Gebiet der Emulsionspolymerisation sind Alkylglykoside trotz der zahlreichen an sonst bekannten Verwendungen bisher nicht eingesetzt worden. Auf diesem Gebiet der Technik ist es für den Fachmann bisher nicht möglich, aus der chemischen Struktur einer Substanz genaue Rückschlüsse auf deren Eignung als Polymerisationsemulgator zu ziehen. Auf Grund der zahlreichen Anforderungen, die heute an Polymerdispersionen gestellt werden, besteht darhe laufend Bedarf nach neuen Polymerisationsemulgatoren. Dabei übt der im Emulsionspolymerisationsverfahren verwendete Emulgator einen charakteristischen Einfluß nicht nur auf den Beginn und den weiteren Reaktionsverlauf der Polymerisation aus, sondern auch auf die mechanische und chemische Beständigkeit der fertigen Polymeremulsionen (Dispersion). So hängen beispielsweise Eigenschaften wie Froststabilität und Lagerstabilität entscheidend vom Emulgator ab.

Die Erfinder haben sich die Aufgabe gestellt, für die Emulsionspolymerisation Emulgatoren bereitzustellen, die einerseits die günstigen Eigenschaften von Alkylglykosiden, nämlich ihre Herstellbarkeit aus überall verfügbaren nachwachsenden natürlichen Rohstoffen aufweisen und zum anderen hinter der technischen Eigenschaften seither bekannter nichtionischer Emulgatoren, etwa den Ethylenoxidaddukten an Alkylphenole zumindest nicht zurückstehen.

Gegenstand der Erfindung ist somit die Verwendung von Alkylglykosiden aus $C_8$ bis $C_{22}$-Alkanolen und reduzierenden Zuckern, bei denen pro Alkylrest eine Zuckerkette mit im Mittel 1 bis 10 glykosidisch aneinander gebundenen Zuckerresten vorhanden ist, als Coemulgatoren oder Emulgatoren bei der Emulsionspolymerisation ethylenisch ungesättigter Monomerer.

Die erfindungsgemäß eingesetzten Alkylglykoside können beispielsweise nach dem Verfahren der eingangs erwähnten US-A-3 839 318 hergestellt werden. Danach werden Zucker wie beispielsweise Glucose oder Oligosaccharide und Alkohole der gewünschten Kettenlänge, also beispielsweise $C_6$ bis $C_{18}$ in Gegenwart eines sauren Katalysators wie Schwefelsäure bei Temperaturen zwischen 80 und 130 °C zur Reaktion gebracht, wobei das Reaktionswasser durch Vakuumdestillation oder azeotrope Destillation abgetrennt wird und eine Veränderung der Glucose durch Kontrolle von Temperatur und Katalysatorkonzentration weitgehend vermieden wird.

Zur Verwendung als Polymerisationsemulgatoren sind Alkylglykoside geeignet, deren Alkylrest sich von einem Alkohol mit 8 bis 22 C-Atomen und deren Zuckerrest sich von einem reduzierenden Zucker ableitet. Dabei können die Alkylreste geradkettig oder verzweigt sein, sie können eine gerade oder ungerade Anzahl an C-Atomen und gewünschtenfalls auch eine oder mehrere olefinische Doppelbindungen enthalten.

Im Rahmen der Erfindung ist es bevorzugt, Alkylglykoside einzusetzen, die sich von Fettalkoholen ableiten. Bevorzugt. sind Alkylglykoside aus Fettalkoholgemischen der Kettenlänge $C_8$, $C_{10}$, $C_{12}$, $C_{14}$, $C_{16}$ oder $C_{18}$, wobei die $C_{16}$ oder $C_{18}$-Reste auch bis zu 3 ethylenisch ungesättigte Doppelbindungen aufweisen können.

Was den Saccharidrest der Alkylglykoside angeht, so sind Alkylglykoside mit einer Zuckerkette geeignet, die im Mittel 1 bis 10 glykosidisch aneinander gebundene Zuckerreste enthält. Wenngleich hier Zuckerreste aus unterschiedlichen reduzierenden Zuckern eingesetzt werden können, so sind doch Glucose und Maltose bevorzugt. Die Anzahl der Zuckerreste ist dabei ein statistischer Mittelwert, dem die bei diesen Produkten übliche Verteilung zugrunde liegt. Besonders geeignete Emulgatoren sind Alkylglykoside mit im Mittel 1,5 bis 5 Zuckermolekülen pro Alkylrest, insbesondere mit 1,5 bis 5 Glucosemolekülen. Unter diesen wiederum sind Alkylglykoside mit einer C-Kettenlänge $C_8$ bis $C_{14}$ besonders bevorzugte Emulgatoren. Derartige Produkte lassen sich beispielsweise durch Umsetzung von Kokosfettalkohol mit Glukose nach dem Beispiel 6 der eingangs erwähnten US-Patentschrift 3 839 318 herstellen.

Erfindungsgemäß können Alkylglykoside als alleinige Emulgatoren (Primäremulgatoren) bei der Emulsionspolymerisation eingesetzt werden. Dabei werden 0,5 bis 10, insbesondere 2 bis 6 Gewichtsprozent, bezogen auf Gesamtdispersion eingesetzt.

Es ist jedoch bevorzugt, Alkylglykoside zusammen mit an sich bekannten Emulgatoren einzusetzen. So können die Verbindungen kombiniert werden mit anionaktiven, kationaktiven oder anderen nichtiono-

2

genen Emulgatoren. Als anionaktive Emulgatoren können hier Sulfocarbonsäuren, deren Alkylester, Fettalkohol(ether)-sulfate, Alkylphenol(ether)-sulfate, Sulfobernsteinsäure(halb)-ester und/oder Seifen natürlicher oder synthetischer Herkunft mitverwendet werden. Weitere geeignete anionaktive Emulgatoren sind beispielsweise disproportionierte Harzseifen, wasserlösliche Salze verzweigter Monocarbonsäuren, die z. B. durch die sogenannte Guerbetreaktion zugänglich sind, Alkylbenzolsulfonate, Paraffinsulfonate, Alkylnaphthalinsulfonate, wasserlösliche Salze sulfatierter Öle, Alkyletherphosphate, Alkylphenoletherphosphate, Aminoalkanolsulfonsäuren und/oder Alkyldiphenylethersulfonate.

Weiterhin können erfindungsgemäß die Alkylglykoside zusammen mit kationaktiven Emulgatoren eingesetzt werden, beispielsweise mit Fettaminhydrochloriden oder quartären Ammoniumverbindungen. Andere mit den Alkylglykosiden kombinierbare Emulgatoren sind nichtionogene Emulgatoren z. B. Alkylphenol-, Fettsäure- und/oder Fettalkoholethoxylate. Weiterhin können Alkylglykoside auch mit gemischtionischen Verbindungen, also langkettigen Betainen oder Sulfobetainen gemeinsam eingesetzt werden. Bei der Kombination der Alkylglykoside mit anderen Emulgatoren ist es bevorzugt, diese anderen Emulgatoren in Mengen von 10 bis 80 Gewichtsprozent, vorzugsweise 20 bis 50 Gewichtsprozent bezogen auf das Alkylglykosid einzusetzen. Eine besonders bevorzugte Kombination besteht aus Sulfofettsäureestern, Sulfofettsäuren und den erfindungsgemäß eingesetzten Alkylglykosiden. Auch dabei beträgt die eingesetzte Menge an Alkylglykosid zwischen 0,1 und 10, vorzugsweise zwischen 0,5 und 6 Gewichtsprozent, bezogen auf Monomere.

Zur Bearbeitung besonderer Problemstellungen innerhalb der Emulsionspolymerisation kann es auch angeraten sein, Alkylglykoside zusammen mit Schutzkolloiden einzusetzen. Dabei ist jedoch darauf zu achten, daß mechanistisch tatsächlich eine Emulsionspolymerisation vorliegt, d. h. daß die Polymerisationsreaktion in Mizellen stattfindet und dabei Latices entstehen, die in ihrer Teilchengröße kleiner sind als die Ausgangsdispersion. Hierzu sei auf die allgemeine Literatur auf diesem Fachgebiet verwiesen z. B. auf das Buch von F. Hölscher, Titel : « Dispersionen synthetischer Hochpolymerer », Teil I und II, Springer-Verlag Berlin, Heidelberg, New York 1969.

Nach einer ersten Ausführungsform der Erfindung können die Alkylglykoside — vorzugsweise in Kombination mit anionischen Emulgatoren — bei der Emulsionspolymerisation von Olefinen verwendet werden. Geeignete Olefine sind beispielsweise Styrol oder andere Vinylaromaten wie α-Methylstyrol, ferner Isobuten. Weiter können die Emulgatoren bei der Emulsionspolymerisation von Di-Olefinen eingesetzt werden, etwa bei der Herstellung von Kautschuk-Latices im weitesten Sinne, so auf Basis von Butadien, Isopren, chlorierten Butadienen, chlorierten Isoprenen oder von Copolymeren von Diolefinen mit Styrol und/oder Acrylnitril.

Nach einer weiteren Ausführungsform der Erfindung können Alkylglykoside vorzugsweise zusammen mit anionischen Emulgatoren bei der Emulsionspolymerisation von Estern und/oder Amiden der Acryl- und/oder Methacrylsäure eingesetzt werden. So können die Verbindungen verwendet werden bei der Polymerisation der Methyl-, Ethyl-, Propyl-, Isopropyl-, Butyl-, Hexyl-, und/oder 2-Ethylhexylester der Acrylsäure und/oder der Methacrylsäure. Ferner sind die Emulgatoren bei der Emulsionspolymerisation von n-Alkylamiden der Acrylsäure und/oder Methacrylsäure geeignet.

Nach einer weiteren Ausführungsform der Erfindung können Alkylglykoside gewünschtenfalls zusammen mit anionischen Emulgatoren bei der Emulsionspolymerisation von Vinylestern eingesetzt werden. Geeignete Vinylester sind Vinylacetat, Vinylpropionat, Vinyl-2-hexylhexanat sowie höhere Ester des Vinylalkohols. Die Emulgatoren eignen sich weiterhin bei der Polymerisation von Vinylhalogeniden, bevorzugt Vinylhalogenide sind Vinylchlorid oder Vinylidenchlorid.

Die Emulgatoren oder Emulgatormischungen können weiterhin bei der Copolymerisation von mindestens einem der genannten Monomeren mit weiteren gegebenenfalls teilweise wasserlöslichen Monomeren eingesetzt werden. So sind sie bei der Copolymerisation ethylenisch ungesättigter Monomerer mit Acrylnitril, Methacrylnitril, Malein- oder Fumarestern, z. B. Di-n-Butylmaleinat oder mit Monobutylmaleinat geeignet.

Schließlich eignen sich die Emulgatoren oder Emulgatormischungen auch bei der Emulsionspolymerisation von Mischungen unterschiedlicher Monomerer wie etwa von Acrylaten mit Styrol, Ethylen mit Vinylacetat oder von Vinylchlorid mit Vinylacetat sowie von Vinylacetat mit langkettigen Vinylestern, beispielsweise Versaticsäurevinylester.

Erfindungsgemäß werden die Emulgatoren auch bei der Copolymerisation ethylenisch ungesättigter, wasserunlöslicher Monomerer mit dissoziierbaren, wasserlöslichen Monomeren eingesetzt. Der Anteil der dissoziierbaren wasserlöslichen Monomeren beträgt dabei, bezogen auf Gesamtmonomere weniger als 40 Gewichtsprozent, vorzugsweise zwischen 0,5 und 15 Gewichtsprozent.

Als wasserlösliche, dissoziierbare Monomere können eingesetzt werden : Acrylsäure, Methacrylsäure, Itaconsäure, Maleinsäure, Fumarsäure, Halbester der Maleinsäure oder Fumarsäuren, Crotonsäure, Vinylsulfonsäure, Vinylphosphonsäure und/oder 2-Acrylamino-2-Methylpropansulfonsäure. Die Säuren werden bevorzugt als Salze, beispielsweise als Alkalimetallsalze oder Ammoniumsalze eingesetzt. Weitere geeignete Comonomere sind basische Ester der Acryl- und/oder Methacrylsäure z. B. Dimethylaminoethylmethacrylat.

Bei der erfindungsgemäßen Verwendung der Alkylglykoside beträgt das bevorzugte Verhältnis zwischen Monomeren und Wasser 1 : 3 bis 1 : 1 Gewichtsteile. Zusammen mit den Emulgatoren können bei der Emulsionspolymerisation übliche Hilfsstoffe eingesetzt werden. Derartige übliche Hilfsstoffe sind

3

0 182 282

beispielsweise Polymerisationsinitiatoren und/oder Beschleuniger wie z. B. Kalium- oder Ammoniumpersulfat, Wasserstoffperoxid; Reduktionsmittel wie Salze der schwefligen Säure oder der Dithionsäure, Übergangsmetallverbindungen und dergleichen mehr. Aufgrund der vergleichsweise geringeren Stabilität der Alkylglykoside bei pH-Werten > 7 ist es bevorzugt als weitere Hilfsstoffe Puffersubstanzen wie Natriumhydrogencarbonat oder Natriumpyrophosphat, Ammoniumacetat oder Natriumacetat einzusetzen.

Verwendet werden können weiterhin Molekulargewichtsregler, wie beispielsweise organische Schwefelverbindungen von der Art des Mercaptoethanols oder der Thioglykolsäure oder Thioglykolsäureester mit mehrfunktionellen Alkoholen wie Ethylenglykol oder Glycerin.

Unter Verwendung der erfindungsgemäß geeigneten Emulgatoren kann die Emulsionspolymerisation im üblichen Temperaturbereich zwischen 0 und 120°, vorzugsweise zwischen 40 und 100° durchgeführt werden. Dabei kann unter Normaldruck oder auch wie bei gasförmigen Monomeren gefordert, unter erhöhtem Druck gearbeitet werden. Es können die dem Polymerisations-Fachmann bekannten verschiedene Zugabeweisen angewendet werden. So kann im Reaktionsgefäß eine Emulsion hergestellt werden und dann polymerisiert werden oder es kann auch gewünscht werden, daß Monomere, Hilfsstoffe oder auch weitere Emulsion während der Polymerisation chargenweise und kontinuierlich zudosiert werden.

Wie anhand der folgenden Beispiele aufgezeigt, werden mit Hilfe von Alkylglykosiden koagulatarme stabile Dispersionen erhalten. Sieht man von den Sorbitanestern ab, die allerdings im nicht ethoxylierten Zustand nicht oder wenig geeignete Polymerisationsemulgatoren darstellen, so liegt hier erstmals eine Substanzklasse von nichtionischen Polymerisationsemulgatoren vor, die sich nicht von Ethylenoxid ableitet. Die Erfindung stellt daher für den technisch wichtigen Bereich der Emulsionspolymerisation zu den auf diesem Gebiet dominierenden Ethylenoxidaddukten alternativ Produkte mit hervorragendem Eigenschaftsbild bereit.

Beispiel 1

Gearbeitet wurde in einer geschlossenen beheizbaren 2 l-Planschliffapparatur, ausgerüstet mit V4A-Ankerrührer, Tropftrichter, Rückflußkühler und einem 2 l-Vorlegegefäß mit Blattrührer. In den Reaktor wurden gegeben :

195,64 Gewichtsteile vollentsalztes Wasser
3,50 Gewichtsteile C$_{12}$/C$_{14}$-Fettalkoholethersulfat (Ethoxylierungsgrad 4) ; 100 % Aktivsubstanz
0,24 Gewichtsteile Kaliumperoxidisulfat
0,5 Gewichtsteile Natriumhydrogencarbonat

Es wurde 20 Minuten mit Stickstoff gespült und sodann auf 75 °C aufgeheizt. Im Vorlegegefäß wurde die folgende Emulsion hergestellt :

246,9 Gewichtsteile vollentsalztes Wasser
1,5 Gewichtsteile C$_{12}$/C$_{14}$-Fettalkoholethersulfat (Ethoxylierungsgrad 4)
5,00 Gewichtsteile nichtionischer Emulgator
1,9 Gewichtsteile Peroxodisulfat
225,4 Gewichtsteile 2-Ethylhexylacrylat
254,8 Gewichtsteile Methylmethacrylat
9,8 Gewichtsteile Methacrylsäure

Im Tropftrichter wurde eine Lösung aus 0,24 Gewichtsteilen Kaliumperoxidisulfat und 4,56 Gewichtsteilen vollentsalztem Wasser hergestellt.

Bei einer Temperatur von 75 °C wurde mit der Zudosierung der Preemulsion in das Reaktionsgefäß begonnen und diese unter Aufrechterhaltung der exothermen Reaktion innerhalb von ca. 2 Stunden zugegeben. Die Reaktor-Innentemperatur betrug 78 bis 82 °C. Es wurde dann die im Tropftrichter bereitete Lösung von 0,24 Gewichtsteilen Kaliumperoxidisulfat in 4,56 Gewichtsteilen vollentsalztem Wasser zur Nachinizierung zugegeben. Dazu wurde 60 Minuten bei Temperaturen zwischen 85 und 90 °C gehalten. Nach Abkühlung auf 30 °C wurde mit einer Lösung von 5 Gewichtsteilen Natriumhydrogencarbonat in 45 Gewichtsteilen vollentsalztem Wasser neutralisiert.

Als nichtionischer Emulgator wurde verwendet :

Beispiel 1a

Alkylglykosid auf Basis eines Fettalkohols aus Kokosfettsäure und Glukose mit im statistischen Mittel 2,2 Glukose Einheiten pro mol Fettalkohol.

Beispiel 1b

Umsetzungsprodukt von Nonylphenol mit 20 mol Ethylenoxid. Die Eigenschaften der beiden Dispersionen sind in der nachfolgenden Tabelle aufgeführt.

4

Tabelle

|  | Beispiel 1 a<br>erfindungsgemäß | Beispiel 1 b<br>Vergleichs-<br>beispiel |
|---|---|---|
| Trockenrückstand nach der Polymerisation (%) | | |
| theoretisch | 50,8 | 50,8 |
| praktisch | 50,8 | 50,1 |
| Teilchengröße (in nm) | 107 | 152 |
| Viskosität (mPa·s) (Brookfield, Spindel 2, 20 Upm) | 400 | 100 |
| Filmbeurteilung | ⊢— klar, farblos, feinrissig —⊣ | |
| Filmbeurteilung nach Wasserlagerung | | |
| 1 Stunde | 0 | 0 |
| 2 Stunden | 0 | 0 |
| 3 Stunden | 1 | 1 |
| 4 Stunden | 1 | 1 |
| 5 Stunden | 1 | 1 |
| 6 Stunden | 1 | 1 |
| 24 Stunden | 2 | 2 |
| Koagulatgehalt (%) | < 0,05 | 0,2 |

## Beispiel 2

In gleicher Weise wurden Vinylacetat-Vinylester-Copolymere durch Emulsionspolymerisation hergestellt.

Vinylacetat-Vinylester-Copolymer.

| | a | b | c | d | e | f |
|---|---|---|---|---|---|---|
| | (Mengenangaben = Gew.-Teile) | | | | | |
| Lösung 1 | | | | | | |
| dest. Wasser | 189,8 | 189,8 | 189,0 | 189,0 | 189,8 | 189,0 |
| Kaliumperoxo-disulfat | 0,5 | 0,5 | 0,5 | 0,5 | 0,5 | 0,5 |
| Borax | 0,2 | 0,2 | 0,2 | 0,2 | 0,2 | 0,2 |
| anionaktiver Emulgator I | 3,0 | 3,0 | — | — | 3,0 | — |

(Fortsetzung)

| | a | b | c | d | e | f |
|---|---|---|---|---|---|---|
| (Mengenangaben = Gew.-Teile) | | | | | | |
| anionaktiver Emulgator II | – | – | 3,8 | 3,8 | – | 3,8 |

anionaktiver Emulgator I: Sulfobernsteinsäurehalbester eines niedrigethoxylierten Laurylalkohols, Di-Na-Salz, Aktivsubstanzgehalt 42,0 %

anionaktiver Emulgator II: entsprechend DE-Patentanmeldung P 33 39 407.5 : Mischemulgator aus einem $C_{12}/C_{18}$-$\alpha$-Sulfofettsäuremethylester, Na-Salz, und einer $C_{12}/C_{18}$-$\alpha$-Sulfofettsäure, Di-Na-Salz, AS 33,0 %

Beispiele 2a-d = erfindungsgemäß
Beispiele 2e, f = Vergleichsbeispiele

| | a | b | c | d | e | f |
|---|---|---|---|---|---|---|
| (Mengenangaben = Gew.-Teile) | | | | | | |
| **Lösung 2** | | | | | | |
| dest. Wasser | 281.2 | 280,9 | 280.6 | 280.3 | 286.3 | 285.7 |
| anionaktiver Emulgator I | 1.9 | 1.9 | – | – | 1.9 | – |
| anionaktiver Emulgator II | – | – | 2.5 | 2.5 | – | 2.5 |
| nichtionogener Emulgator (Typ) | 17.1 (A) | 17.4 (B) | 17.1 (A) | 17.4 (B) | 12.0 (C) | 12.0 (C) |
| Kaliumperoxo-disulfat | 1.9 | 1.9 | 1.9 | 1.9 | 1.9 | 1.9 |
| Borax | 2.1 | 2.1 | 2.1 | 2.1 | 2.1 | 2.1 |
| **Lösung 3** | | | | | | |
| Vinylacetat | 330.1 | 330.1 | 330.1 | 330.1 | 330.1 | 330.1 |
| Versaticsäure-vinylester (VeoVa 10, Shell) | 143.5 | 143.5 | 143.5 | 143.5 | 143.5 | 143.5 |
| Acrylsäure | 4.8 | 4.8 | 4.8 | 4.8 | 4.8 | 4.8 |
| Ammoniumcarbonat (10-prozentig) | 23.9 | 23.9 | 23.9 | 23.9 | 23.9 | 23.9 |
| Ansatz | 1000.0 | 1000.0 | 1000.0 | 1000.0 | 1000.0 | 1000.0 |
| Koagulatanteil | 0.1 | < 0.1 | 0.1 | < 0.1 | 0.5 | < 0.1 |

Emulgator-Typ A = Umsetzungsprodukt von 2.6 mol Fettalkohol C8/C10 mit 1 mol Glucose Oligomerisationsgrad 1,8

Emulgator-Typ B = Umsetzungsprodukt von 3 mol Kokos-Fettalkohol C12/C14 mit 1 mol Glucose Oligomerisationsgrad 2,2

Emulgator-Typ C = Nonylphenol + 15 EO Apparatur

s. Beispiel 1

Durchführung

Die Komponenten der Lösung 1 werden in das Reaktionsgefäß vorgelegt, mit Stickstoff gespült und auf 80 °C aufgeheizt. Während der Aufheizphase wird im Vorlagegefäß durch Zugabe der Monomerlösung 3 zur emulgatorhaltigen wäßrigen Phase Lösung 2 durch kräftiges Rühren eine Präemulsion hergestellt. Der pH-Wert der Präemulsion wird auf 3,8 bis 4,0 eingestellt. Bei Erreichen einer Reaktorinnentemperatur von 80 °C wird mit der Dosierung der Monomerpräemulsion begonnen. Die Dauer der Dosierung beträgt 2 bis 2,5 Stunden. Nach beendeter Zugabe wird die Temperatur des Reaktionsgemisches weitere 2 Stunden bei 80 °C gehalten. Die Dispersion wird abgekühlt und filtriert und der pH-Wert mit 23.9 g einer 10-prozentigen Ammoniumcarbonat-Lösung auf 7,0 bis 7,5 eingestellt.

Die Eigenschaften der nach Beispiel 2 hergestellten Polymerdispersionen sind nachfolgend aufgeführt.

| | a | b | c | d | e | f |
|---|---|---|---|---|---|---|
| Trockenrückstand (theor. 50 %) | 49.3% | 49.3% | 49.0% | 49.4% | 49.2% | 49.4% |
| Teilchengröße (nm) | 186 | 166 | 175 | 168 | 188 | 160 |
| Dispersität | O-3 | O-3 | O-2 | O-2 | O-3 | 3-5 |
| Brookfield-Viskosität, 20 °C (mPa.s) (Spindel 1) | 63 | 100 | 68 | 103 | 83 | 88 |

Prüfmethoden

1. Koagulatgehalt nach der Herstellung

Die fertiggestellte Dispersion wird durch einen tarierten Perlonsiebbeutel der Firma Schwegmann mit 80 μm Maschenweite abgefüllt. Der Siebbeutel mit evtl. vorhandenem Koagulat wird 24 Stunden bei 105 °C getrocknet und das Koagulat durch Differenzwägung bestimmt.

2. Trockengehalt

Trockenrückstandsbestimmungen (Fa. Sartorius), Typ 709301. Der Feststoffgehalt wird bei Stufe 7 und 20 min Trockenzeit bestimmt. Die Einwaage beträgt ca. 5 g.

3. Bestimmung des mittleren Teilchengrößenbereichs durch automatische Messung im Coulter-Nano-Sizer

Die gemessenen Werte werden vom Bestimmungsgerät in nm ermittelt. Neben der mittleren Teilchengrößenmessung kann mit dem Coulter-Nano-Sizer eine Aussage über die Polydispersität einer Dispersion gemacht werden.

Bei der Polydispersität wird die Teilchengrößenverteilung einer Dispersion klassifiziert. Die Teilchengrößenverteilung wird einem Zahlenwert von 0 bis 9 zugeordnet, wobei der Zahlenwert 0 bis 1 ausschließlich monodispers und der Zahlenwert 8 bis 9 ausschließlich polydispers bedeutet.

4. Viskosität

Die Viskosität wird mit einem Brookfield-Viskosimeter vom Typ RVT bei 25 °C gemessen.

5. Filmbeurteilung

Mit einem Ziehlineal (ca. 1 mm Spalthöhe) wird ein Naßfilm auf Objektträger (76 × 26 mm Klarglas)

ausgezogen. Der Film wird 48 Stunden bei Raumtemperatur getrocknet. Die Beurteilung erfolgt auf Transparenz, Rißbildung, Verlauf usw.

6. Wasserempfindlichkeit von Dispersionsfilmen

Die wie unter Punkt 5 beschrieben hergestellten Filme werden über einen Zeitraum von 24 Stunden in Leitungswasser gelagert. Die Beurteilung erfolgt nach einer Skala von 0 bis 6 in Abständen von einer Stunde.

0 = Film klar, unverändert
1 = Randzonen leicht getrübt (durch Verlauf der Dispersionen können Randzonen geringerer Schichtdicke entstehen)
2 = Film insgesamt leicht getrübt
3 = Film milchig
4 = Film milchig bis weiß angelaufen
5 = Film teilweise zerstört, weiß angelaufen
6 = Film stark zerstört und weiß angelaufen
Die Haftung der Dispersionen zum Glas wird nicht berücksichtigt.

**Patentansprüche**

1. Verwendung von Alkylglykosiden aus $C_8$ bis $C_{22}$-Alkanolen und reduzierenden Zuckern, bei denen pro Alkylrest eine Zuckerkette mit im Mittel 1 bis 10 glykosidisch aneinander gebundenen Zuckerresten vorhanden ist, als Coemulgatoren oder Emulgatoren bei der Emulsionspolymerisation ethylenisch ungesättigter Monomerer.

2. Ausführungsform nach Anspruch 1, dadurch gekennzeichnet, daß Alkylglykoside aus Fettalkoholgemischen und Glucose und/oder Maltose eingesetzt werden.

3. Ausführungsform nach den Ansprüchen 1 und 2, dadurch gekennzeichnet, daß Alkylglykoside mit einer Zuckerkette mit im Mittel 1,5 bis 5 Zuckerresten eingesetzt werden.

4. Ausführungsform nach den Ansprüchen 1 bis 3, dadurch gekennzeichnet, daß Alkylglykoside mit Alkylresten aus $C_8$ bis $C_{14}$-Fettalkoholgemischen eingesetzt werden.

5. Ausführungsform nach Anspruch 4, dadurch gekennzeichnet, daß die Alkylglykoside gemeinsam mit kationischen oder anionischen Emulgatoren und/oder in Kombination mit anderen nichtionogenen Emulgatoren eingesetzt werden.

6. Ausführungsform nach den Ansprüchen 1 bis 5, dadurch gekennzeichnet, daß die Alkylglykoside mit 10 bis 80, vorzugsweise 20 bis 50 Gewichtsprozent kationischen oder anionischen Emulgatoren, bezogen auf Alkylglykosid eingesetzt werden.

7. Ausführungsform nach den Ansprüchen 1 bis 6, dadurch gekennzeichnet, daß die Alkylglykoside gemeinsam mit Sulfocarbonsäuren, deren Alkylestern, Fettalkohol-(ether)-sulfaten, Alkylphenol (ether)-sulfaten, Alkyl-(aryl)-sulfonaten, Sulfobernsteinsäure-(halb)-estern und/oder Seifen, Alkyl-(phenol)-etherphosphaten eingesetzt werden.

8. Ausführungsform nach den Ansprüchen 1 bis 7, dadurch gekennzeichnet, daß die Alkylglykoside in Mengen von 0,1 bis 10 Gewichtsprozent, vorzugsweise 0,5 bis 6 Gewichtsprozent, bezogen auf Monomere eingesetzt werden.

9. Ausführungsform nach den Ansprüchen 1 bis 8, dadurch gekennzeichnet, daß die Alkylglykoside bei der Homo- oder Copolymerisation von Vinylestern, (Meth)Acrylsäureestern, Olefinen, Diolefinen und/oder ungesättigten Halogenverbindungen eingesetzt werden.

**Claims**

1. The use of alkylglycosides of $C_8$-$C_{22}$ alkanols and reducing sugars in which one sugar chain containing on average 1 to 10 sugar residues attached to one another by glycoside bonds is present per alkyl radical as co-emulsifiers or emulsifiers in the emulsion polymerization of ethylenically unsaturated monomers.

2. The use claimed in Claim 1, characterized in that alkyl glycosides of fatty alcohol mixtures and glucose and/or maltose are used.

3. The use claimed in Claims 1 and 2, characterized in that alkylglycosides with a sugar chain containing on average 1.5 to 5 sugar residues are used.

·4. The use claimed in Claims 1 to 3, characterized in that alkylglycosides containing alkyl radicals of $C_8$-$C_{14}$ fatty alcohol mixtures are used.

5. The use claimed in Claim 4, characterized in that the alkylglycosides are used together with cationic or anionic emulsifiers and/or in combination with other non-ionic emulsifiers.

6. The use claimed in Claims 1 to 5, characterized in that the alkyl glycosides are used together with from 10 to 80 and preferably 20 to 50 % by weight cationic or anionic emulsifiers, based on alkyl glycoside.

7. The use claimed in Claims 1 to 6, characterized in that the alkyl glycosides are used together with sulfocarboxylic acids, alkyl esters thereof, fatty alcohol (ether) sulfates, alkylphenol (ether) sulfates, alkyl (aryl) sulfonates, sulfosuccinic acid (semi) esters and/or soaps, alkyl (phenol) ether phosphates.

8. The use claimed in Claims 1 to 7, characterized in that the alkyl glycosides are used in quantities of from 0.1 to 10 % by weight and preferably in quantities of from 0.5 to 6 % by weight, based on monomers.

9. The use claimed in Claims 1 to 8, characterized in that the alkyl glycosides are used in the homo- or copolymerization of vinyl esters, (meth)acrylic acid esters, olefins, diolefins and/or unsaturated halogen compounds.

## Revendications

1. Utilisation d'alcoylglycosides à partir d'alcanols en $C_8$ à $C_{22}$ et de sucres réducteurs, dans lesquels par radical alcoyle est présente une chaîne de sucre avec en moyenne 1 à 10 radicaux de sucre reliés les uns aux autres glycosidiquement, en tant que co-émulsifiants ou émulsifiants dans la polymérisation en émulsion de monomères éthyléniquement insaturés.

2. Forme d'exécution selon la revendication 1, caractérisée en ce qu'on utilise des alcoylglycosides de mélanges d'alcools gras et de glucose et/ou de maltose.

3. Forme d'exécution selon les revendications 1 et 2, caractérisée en ce qu'on utilise des alcoylglycosides ayant une chaîne de sucre avec en moyenne 1,5 à 5 radicaux de sucre.

4. Forme d'exécution selon les revendications 1 à 3, caractérisée en ce qu'on utilise des alcoylglycosides avec radicaux alcoyle provenant de mélanges d'alcools gras en $C_8$ à $C_{14}$.

5. Forme d'exécution selon la revendication 4, caractérisée en ce qu'on utilise les alcoylglycosides conjointement avec des émulsifiants cationiques ou anioniques et/ou en combinaison avec d'autres émulsifiants non ionogènes.

6. Forme d'exécution selon les revendications 1 à 5, caractérisée en ce qu'on utilise les alcoylglycosides avec 10 à 80, de préférence 20 à 50 % en poids d'émulsifiants cationiques ou anioniques par rapport à l'alcoylglycoside.

7. Forme d'exécution selon les revendications 1 à 6, caractérisée en ce qu'on utilise les alcoylglycosides conjointement avec des acides sulfocarboxyliques, leurs esters alcoylés, des sulfates d'alcools gras (éthers), des sulfates d'alcoylphénols (éthers), des alcoyl-(aryl)-sulfonates, des (semi) esters d'acide sulfosuccinique et/ou des savons, des alcoyl(phénol)-éther-phosphates.

8. Forme d'exécution selon les revendications 1 à 7, caractérisée en ce qu'on utilise les alcoylglycosides en des quantités de 0,1 à 10 % en poids, de préférence de 0,5 à 6 % en poids, par rapport aux monomères.

9. Forme d'exécution selon les revendications 1 à 8, caractérisée en ce qu'on utilise les alcoylglycosides dans l'homo- ou copolymérisation d'esters vinyliques, d'esters (méth)acryliques, d'oléfines, de dioléfines et/ou de composés halogénés insaturés.